# EUROPEAN PATENT APPLICATION

(11) **EP 0 985 345 A1**
(43) Date of publication of application: **15.03.2000**
(21) Application number: 99202919.9
(22) Date of filing: 08.09.1999
(51) Int. Cl.: A01M 29/00

(54) **Device and method for repelling animals, in particular birds**

(30) Priority: 08.09.1998 NL 1010028
(71) Applicant: in't Veld, Anne-Mieke, 3723 HM Bilthoven (NL)
(72) Inventor: in't Veld, Anne-Mieke, 3723 HM Bilthoven (NL)
(74) Representative: Ottevangers, Sietse Ulbe

(57) **Abstract**

Device for repelling animals, in particular birds, comprising a kite and a line with which the kite can be connected to a substantially positionally fixed point, the kite substantially having the shape of a bird of prey and the line being of elastic design.

## Description

The invention relates to a device for repelling animals, in particular birds.

Animals such as birds, rodents and the like cause a nuisance in, for instance, agriculture, orchards, at waste processing and storing companies, in harbors, at buildings, above open water such as fishponds, at drilling rigs and the like. Many means for repelling animals are known, which, however, are usually costly and cause a nuisance to the surroundings.

It is known to repel birds and other animals by means of noise. For that purpose, at regular or irregular intervals, a cannon is fired or a sudden hard noise is produced in another manner, which frightens the animals. Such method causes annoyance to the surroundings, for which reason this method is not allowed at all times and in all places, while, moreover, animals prove to get used to it. Consequently, this method eventually loses its effectiveness.

Further, there are used different means which, with or without movement, are supposed to deter animals, such as scarecrows, waving, light-reflecting foil sheets and the like. However, animals prove not to be deterred thereby, or at least not permanently, while such means cause a substantial environmental pollution, in particular visually.

Further, it is known to hang helium-filled balloons in, for instance, an orchard, on which balloons, for instance, heads of birds of prey have been painted. These balloons have proved to be effective only temporarily, while they should moreover be re-inflated periodically, because otherwise they fall on the ground.

It is also known to employ birds of prey for repelling animals, for instance by having trained falcons chase the animals that cause the nuisance. However, the drawback of such method is that it is relatively costly, while birds of prey are not permanently employable. A further drawback of this known method may be that animals are not only repelled thereby, but will form a prey to the raptors, which may be undesired or even prohibited, in particular when the animals causing the nuisance are uncommon animals, while this method is moreover particularly expensive. Comparable drawbacks are involved in the shooting of animals.

The object of the invention is to provide a device for repelling animals, in particular birds, in which the above-mentioned drawbacks of the known devices and methods are avoided, while the advantages thereof are maintained. To that end, a device according to the invention is characterized by the features of claim 1.

Surprisingly, it has been found that a kite, in particular a kite having the outward appearance of a bird of prey, has an effect on animals that is comparable with the effect of live birds of prey. Accordingly, if a kite according to the present invention flies in the neighborhood of an object to be protected, such as an orchard, a field, a forage pit, a building or the like, it will give the animals the impression that a bird of prey is flying around, which will stop the animals from coming any closer, or will at least repel the animals. By fastening the kite by means of an elastic line to a positionally fixed point adjacent the object to be protected, the kite can fly around freely without having to be controlled, so that the kite can remain aloft for several hours, if so desired, for instance 24 hours per day, without requiring supervision. Thus, animals are repelled particularly economically and effectively and in an animal-friendly manner. As the line is elastic, the flight pattern of the kite will change each time, depending on, inter alia, wind velocity, wind direction, planting and building constructions of the surroundings, the unevenness thereof and the momentary elastic deformation of the line. This means that relatively natural movements of the kite will be realized, or at least monotonous movement of the kite will be prevented. This increases the deterrent effect of the device even further. Moreover, the elasticity of the line readily prevents the occurrence of damages to, for instance, the line, fasteners and the kite. Also, such line has proved to be advantageous, because the kite is thereby prevented from getting entangled in the line under the influence of its own movements. Indeed, also during changing conditions, such as changing wind direction, the elastic line will practically always remain taut.

In an advantageous embodiment, a device according to the invention is further characterized by the features of claim 2.

By attaching the line to a rotatable coupling means at the top end of a mast, the advantage achieved is that the kite obtains a wider flying range without touching the ground or other obstacles, while the rotatable coupling means provides that the line is readily prevented from winding around the mast. In this context, "positionally fixed" should be understood to mean directly or indirectly connected to the fixed world such that the freedom of movement of the kite is thereby limited within pre-defined bounds. The positionally fixed point may in fact have, for instance, some freedom of rotation and/or translation.

By providing a mast whose length is greater than the maximum length of the elastic line, a maximum flying range of the kite is achieved, at least when the mast has its bottom end connected to the fixed world, because in that case, the kite cannot touch the ground.

In further elaboration, a device according to the invention is further characterized by the features of claim 5, in particular of claims 5 and 6.

The rotatable second coupling means, in particular the rotatable second and third coupling means attached on opposite ends of the line, offer the advantage of preventing even more effectively the possibility that the kite gets entangled with the line and/or the line gets entangled with, for instance, the mast. After all, the rotatable couplings provide for freedom of movement of the line such that no or hardly any torsion will occur therein as a result of the flying movements of the kite.

In a particularly advantageous embodiment, a device according to the invention is further characterized by the features of claim 7.

Manufacturing the line from an elastic material having a relatively high stretch offers the advantage that relatively great changes may occur in the flight pattern of the kite. Indeed, different loads of the kite, due to, for instance, changing wind force, will then involve greater changes in the length of the line and, accordingly, in the flight pattern. Moreover, forces that occur can be thus be taken up more easily, so that damages can be prevented in an even better manner. Moreover, the use of plastic for the line offers the advantage that it can simply be designed so as to be relatively little abrasive, so that damages to the kite can be prevented even more simply.

The line of a device according to the invention is preferably manufactured from polyurethane. Precisely such a plastic offers particularly good elastic properties. Further, the line of a device according to the invention is preferably designed in a hardly noticeable color, in particular a camouflage color, such as, for instance, green or transparent. Depending on the desired area of application, a suitable choice can of course be made in this respect.

The invention further relates to a method for repelling animals, in particular birds, characterized by the features of claim 10.

With such method, the repelling of birds and other animals can readily and economically be provided in an animal-friendly manner. In particular, the advantage achieved with such a method is that a deterrent effect can be permanently obtained, comparable with the deterrent effect of live birds of prey, without requiring constant supervision or, for instance, control operations and without the animals getting injured or killed.

Hence, such method is economically applicable, animal-friendly and particularly effective.

The invention further relates to a kite for use in a device according to the invention and to a line for use with such device.

Further advantageous embodiments of a device and method according to the invention are given in the subclaims.

To specify the invention, an exemplary embodiment of a device and method for repelling animals will hereinafter be described with reference to the accompanying drawings. In these drawings:
Fig. 1 is a schematic side elevation of a device according to the invention;
Fig. 2 is a schematic rear view of a device according to the invention, in an alternative embodiment;
Fig. 3 is a top plan view of a device according to Fig. 1 or 2; and
Fig. 4 shows a portion of a line with fasteners for use in a device according to the invention.

In this specification, identical or corresponding parts have identical or corresponding reference numerals. In this specification, the device will be described for repelling birds, yet it will be understood that other animals, too, can be repelled in a comparable manner, for instance rodents.

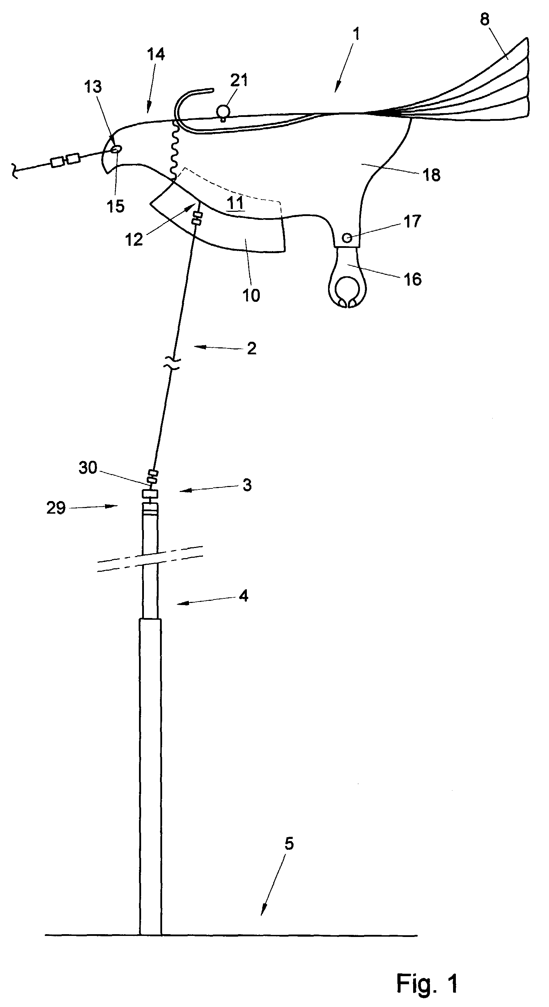

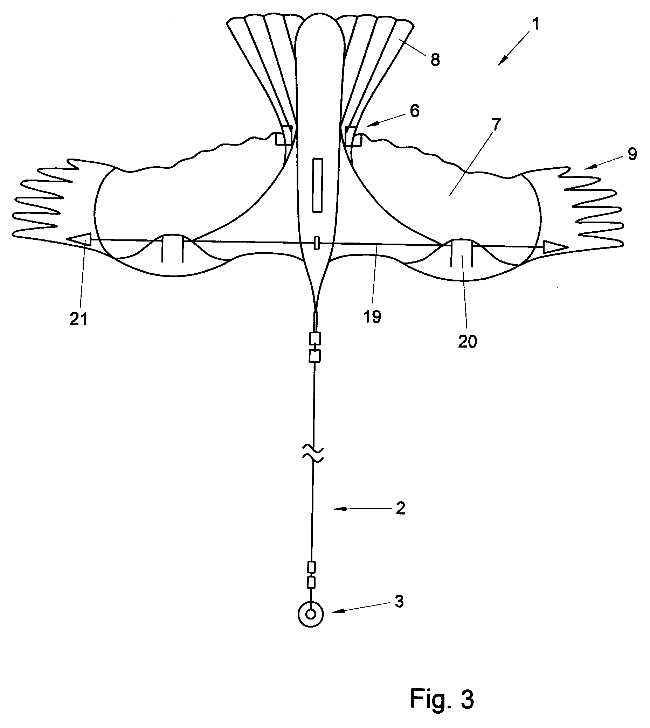

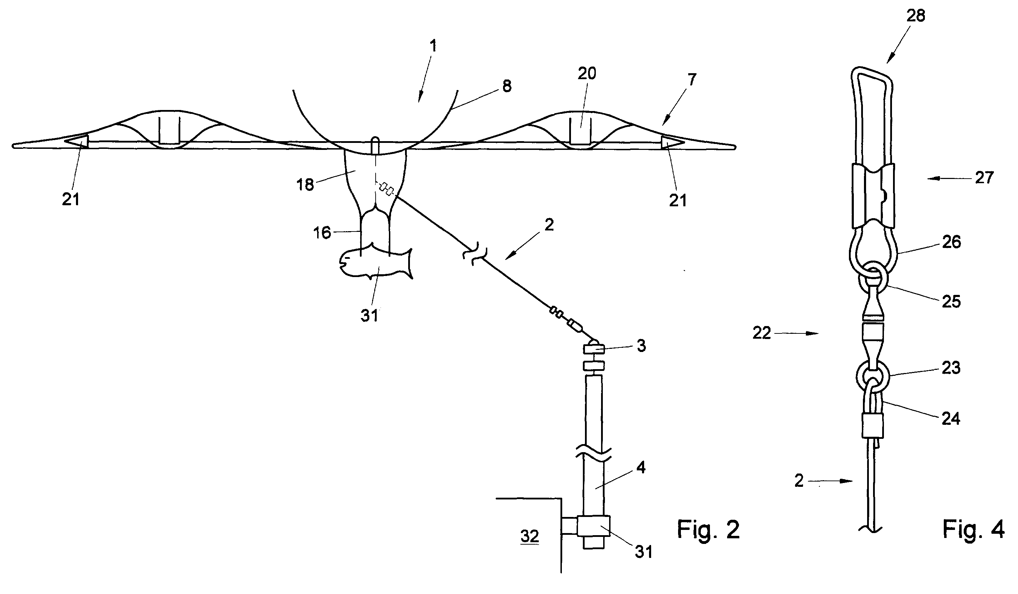

A device according to the present invention comprises a kite 1 in the form of a bird of prey, connected via a line 2 to a fastening point 3, which in the embodiments shown in Figs. 1 and 2 is provided on the top end of a telescopic pole 4. However, the fastening point 3 may also be connected directly or indirectly to the ground 5 in another manner, for instance via a ground pin, a bolted joint, bricking-in or the like, while the fastening point may be provided on different bases and in different positions, both on a natural object and on an artifact. A device according to the present invention is applicable above land as well as above water, in nature as well as at, for instance, buildings and the like.

As to its outward appearance, the kite 1 is a relatively true-to-nature copy of a bird of prey, for instance of a sea eagle, osprey, falcon or buzzard or the like. Kites of this type are generally known and are, for instance, supplied by the firm Jackite® Inc., Virginia Beach, USA. These birds are for instance made from Tyvek®. However, it will be understood that other kites, manufactured from a different material, may in principle also be used in a device according to the present invention. A kite according to the present invention is reinforced at different places, such that it can remain aloft for a long period, even permanently, without the occurrence of damages resulting from contact with the line 2. Such reinforcements are made, for instance through the provision of an additional layer of plastic, at the transition 6 between the wing 7 and the tail 8, at the extremities 9 of the wings 7 and, through the provision of a breast flap 10, against the breast 11 of the bird-shaped kite 1. At the breast flap 10, a first fastening point 12 for the line 2 is provided, while the eye 13 in the head 14 of the kite 1 forms a second fastening point 15 for a line 2. Further, the legs 16 are connected to the trunk 18 of the kite 1 by press-studs 17 as well as by a glued and/or tacked or wire connection. This readily prevents the legs 16 from possibly becoming detached. A rod 19, passed through rod holders 20 in the wings 7 and through a ring 21 on the back of the kite 1, has its ends permanently fitted in insert pockets 21 adjacent the ends 9 of the wings 7, so that the rod 19 is simply prevented from becoming detached, while the rod 19 will keep the wings 7 and the trunk 18 in the desired position. The first fastening point 12 and the second fastening point 15 are additionally reinforced as well, to prevent the kite 1 from becoming detached.

The line 2 is manufactured from a relatively elastic plastic, in particular polyurethane, having a relatively high limit of elasticity. Thus, the line can allow preferably more than 10% stretch during normal load, more in particular more than 25% stretch and preferably for instance 50% stretch or more. In a particularly advantageous embodiment, the line can become about 75% longer without involving plastic deformation. The line 2 has, for instance, a diameter of a few millimeters, in the shown embodiment for instance a diameter of 2 mm. However, these values can of course be optimized in a simple manner, depending on the circumstances in which the device is used, for instance depending on the load capacity of the kite 1, the wind force to be expected, duration of use, allowable stretch and starting length of the line 2, and the like. Such choices will be directly clear to a skilled person.

Fig. 4 shows a first end of a line 2 according to the invention, comprising a rotatable coupling means 22 in the form of a swivel, in particular a swivel of the ball type. The swivel 22 has its first end connected, via a ring 23, to a loop 24 in the line 2 and has its opposite end connected, via a ring 25, to an eye 26 of a pin 27 of the safety pin type. The pin 27 can simply be attached by its free end 28 to a first fastening point 12 or a second fastening point 15 of the kite 1, but also to the pole 4 in a manner to be described in more detail hereinbelow. To that end, the line 2 has both ends provided with an assembly 22 as shown in Fig. 4. Of course, many variations thereof are possible within the framework of the invention. What only matters is that a simple coupling is possible while rotation of the pin 27 or a like fastener relative to the line 2 is freely possible in all directions, without involving undesired torsion in the line 2.

The pole 4 is of telescopic construction and, for instance, comparable with a telescopic fishing rod. The bottom end of the pole 4 according to Fig. 1 is secured in the ground 5, but in a manner known per Se. The top end of the pole 4 comprises the fastening point 3 having a first rotatable coupling means 29 in the form of a swivel, in particular of the ball swivel type, comparable with the swivel 22. However, this first rotatable coupling means 29 may easily be of a slightly more robust design. The first rotatable coupling means 29 has its first end fixedly connected to the pole 4, while the opposite, second end comprises a ring 30 to which a pin 27 or a like fastener of the line 2, as shown in Fig. 4, can be clasped. In this manner, a movable coupling can therefore be readily obtained between the pole 4, at least the fastening point 3, and the kite 1.

By way of illustration, the pole 4 has, for instance, such a length that the fastening point 3 is located about 4.5 m above the ground 5, while the pole 4 can easily take up a tensile force of at least 800 Newton. In unloaded condition, the line 2 has a length of about 2 m and in maximally loaded condition a length of, for instance, about 3.5 m. Hence, during use, the kite 1 will not a single moment be capable of touching the ground 5, while the freedom of movement of the kite is defined by an approximately spherical space with the fastening point 3 as its center and having a maximum radius of about 3.5 m. These dimensions are given by way of illustration only and should not be regarded as being limitative in any way.

In the embodiment shown in Fig. 2, the pole 4 or a like means has been attached to a wall 32 or the like by means of a support 31, while, of course, the fastening point 3 may be located at a great height above the ground 5 or a water surface or the like.

A device according to the present invention can be employed as follows.

At strategic positions, a pole 4, or at least a fastening point 3, is fixed in position, after which a line 2 with a kite 1 is secured to the fastening point 3. Usually, one pole with one kite will suffice, yet as the case may be, several of such devices may be installed, preferably in such manner that said spherical spaces of movement of the different kites 1 do not overlap, at least not to a significant extent. Next, the kite 1 is released and taken along by the wind. Slight wind will already provide a flight pattern of the kite 1, which flight pattern substantially corresponds to the flight pattern of a normal bird of prey. Depending on the occurring wind force, the line 2 will be elastically deformed, or at least stretched out, as a result of which the distance between the kite 1 and the fastening point 3 on the one hand and the ground 5 on the other will change. In the case of substantial stretch in the line 2, during at least a partial drop of the wind, an acceleration of the kite 1 in the direction of the fastening point 3 will be realized, which will cause unexpected flying movements of the bird. Precisely such unexpected flying movements will have an additionally deterrent effect on animals present in the neighborhood of the device, so that these animals will be repelled in a highly effective manner. Moreover, the elasticity of the line 2 has the advantage that forces exerted on the kite can be taken up more easily, as a result of which damages are prevented even more simply, while, moreover, contact between the kite 1 and the line 2 is prevented even more effectively, so that the lifetime of the kite 1 is increased considerably. Also, a line 2 manufactured from plastic will be little abrasive, so that wear is reduced.

In principle, the kite 1 on the line 2 can, for instance, be hauled in at sunset and released again at sunrise, yet it is preferred that the kite remain fixed to the fastening point permanently.

It will be understood that a kite 1 according to the invention with a line 2 according to the invention, optionally coupled to, for instance, a nylon extension line, can also be used as a normal kite, with the elastic line part 2 providing surprising effects.

The invention is in no way limited to the exemplary embodiments presented in the description and the drawings. Many variations thereof are possible within the framework of the invention, as outlined by the appended claims.

For instance, other materials may be used for the kite and/or the line, while the coupling means of the line and/or the fastening point may be designed differently. Moreover, kites 1 of a different outward appearance may be used, for instance depending on the location where the device is to be employed and the birds of prey that are normally found at that location. In an advantageous embodiment, a device according to the present invention may be packed in a preassembled condition, for instance in a dispatch tube, so that it is ready for use directly upon unpacking. This prevents installation errors. It is preferred that the position of the device be defined by skilled persons, such that any contact between the kite and, for instance, building constructions or grove in the surroundings thereof is prevented. Further, a pole for use with a device according to the invention may of course be designed in a different manner, for instance non-telescopically. Also, a device according to the present device may be used in locations where artificial wind is generated, for instance at windmills and the like.

These and many comparable variations are understood to fall within the framework of the invention.

## Claims

1. A device for repelling animals, in particular birds, comprising a kite and a line with which the kite can be connected to a substantially positionally fixed point, the kite having substantially the shape of a bird of prey and the line being of elastic design.

2. A device according to claim 1, wherein a mast is provided which can be fixedly positioned, said mast comprising, adjacent a top end thereof, a rotatable coupling means, in particular a swivel, which provides the substantially positionally fixed point, the line comprising fasteners for coupling the line to the coupling means.

3. A device according to claim 2, wherein the mast has a length greater than the maximum length of the line.

4. A device according to claim 2 or 3, wherein the mast is of telescopic design.

5. A device according to any one of the preceding claims, wherein the line comprises, at least adjacent the end thereof remote from the kite, a rotatable second coupling means, in particular a swivel of the like, said second coupling means being attachable to said positionally fixed point.

6. A device according to any one of the preceding claims, wherein the line comprises, at least adjacent the end proximal to the kite, a rotatable third coupling means, in particular a swivel or the like, said third coupling means being attachable to the kite.

7. A device according to any one of the preceding claims, wherein the line is manufactured from an elastic material, in particular a plastic, having a relatively high maximum stretch, in particular a stretch of more than 10%, more in particular a stretch of more than 35% and preferably a stretch of more than 50%.

8. A device according to claim 7, wherein as material for the line a thermoplastic plastic, in particular polyurethane, is used, the diameter of the line preferably ranging between 1 and 5 mm, more in particular between 1 and 3 mm and preferably being about 2 mm.

9. A device according to any one of the preceding claims, wherein the kite comprises reinforcing elements, such that during use, damage to the kite by the line is prevented and the kite preferably obtains a natural flight pattern, resembling the flight pattern of a bird of prey.

10. A method for repelling animals, in particular birds, wherein a kite, preferably a kite having the shape of a bird of prey, is connected to a positionally fixed point by means of an elastic line, while the kite, the line and the positionally fixed point are selected such that during use, the kite cannot touch the ground or other obstacles, the line at opposite ends being connected to the kite and the positionally fixed point by means of rotatable couplings, the arrangement being such that at slight wind, the kite on the line is brought into the air and maintained aloft, the flying movements of the kite being determined by at least the wind and the elastic deformations in the line.

11. A method according to claim 10, wherein a number of kites are arranged side by side, each of said kites being capable of covering a separate space.

12. A kite for use in a device according to any one of claims 1-10 or in a method according to claim 11 or 12, said kite having the shape of a bird of prey and being manufactured from plastic, in particular Tyvek®, while reinforcing elements are provided in positions which, during use, frequently contact the line.

13. A line for use in a device according to any one of claims 1-10 or a method according to claim 11 or 12, said line being of elastic design, preferably manufactured from polyurethane or a like plastic, both ends of the line being provided with a rotatable coupling, preferably a swivel or a like rotatable coupling, in particular a ball swivel.
